# EUROPEAN PATENT SPECIFICATION

(11) **EP 2 902 623 B1**
(45) Date of publication and mention of the grant of the patent: **15.04.2020**
(21) Application number: 14382040.5
(22) Date of filing: 04.02.2014
(51) Int. Cl.: F03D 7/02, F03D 80/80

(54) **Methods of operating a wind turbine and wind turbines**
Verfahren zum Betreiben einer Windturbine und Windturbinen
Procédé de fonctionnement d'une éolienne et éoliennes

(43) Date of publication of application: 05.08.2015
(73) Proprietor: GE Renewable Technologies Wind B.V., 4817 PA Breda (NL)
(72) Inventor: Cuadro Urunuela, Victor, 08027 Barcelona (ES)
(74) Representative: de Rooij, Mathieu Julien

(56) References cited:
- EP-A2- 2 549 098
- KR-A- 20130 023 908
- US-A1- 2012 139 245
- HANS KRUCKENBERG: "Wind Turbine Untwisting Past Neutral", PRIOR ART PUBLISHING, 13 April 2012 (2012-04-13), XP040572867,
- DAI CHUNYAN ET AL: "Study on the prevent cable twisting control strategy of wind turbine yaw control system", 2013 2ND INTERNATIONAL SYMPOSIUM ON INSTRUMENTATION AND MEASUREMENT, SENSOR NETWORK AND AUTOMATION (IMSNA), IEEE, 23 December 2013 (2013-12-23), pages 420-424, XP032570961, DOI: 10.1109/IMSNA.2013.6743305 [retrieved on 2014-02-18]

## Description

The present disclosure relates to the field of wind turbines having their axis of rotation in a wind direction.

Specifically it refers to methods of operating a wind turbine for untwisting of cables and wind turbines adapted to carry out such methods.

### BACKGROUND ART

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

A generator may thus generally be provided in a nacelle on top of the tower. Furthermore, the electrical system of a wind turbine usually also comprises a power converter, which is connected to the generator, and a transformer. Although different configurations exist, the generator is usually arranged in the nacelle on top of the tower whereas the transformer is most typically accommodated at or near the base of the tower (alternatively, arrangements with at least one of these components at an intermediate height within the tower have been also employed). In any case, regardless of said particular arrangement, power transmission from the upper part of the tower (i.e. the nacelle) to the base of the tower is required. For that purpose, power cables may extend along the tower. The tower may further serve to support the nacelle and may provide access to the nacelle for maintenance.

In many wind turbines, a yaw system may be provided for rotating the nacelle in or out of the wind direction. In a yaw drive system, generally, a plurality of (electric or hydraulic) motors with suitable reduction gearing may be used for driving gears that mesh with an annular gear attached to the nacelle or to the wind turbine tower. The nacelle can thus be rotated around the tower's longitudinal axis in or out of the wind direction.

As the nacelle rotates with respect to the tower, the cables (power cables and/or other cables), which may be fixed at both ends (from a component in the nacelle to some other component at some point in the tower), become twisted. Depending on the type of cables and on their fixation, the cables can endure more or less twist. Generally, a mechanical twist limit may exist, beyond which the cables may be damaged or broken. Before such damage occurs, the cables need to be untwisted. An untwist operation of a wind turbine may comprise stopping the wind turbine, and rotating the nacelle to a neutral position (or "zero twist" position) in which the cables are not substantially twisted.

A mechanical twist limit beyond which cables get damaged depends among others on the length of the cables. In some wind turbines, a maximum twist limit of 1200 ° (in either direction) is employed.

Frequent cable untwist operations may be required during operation. These untwist operations, which comprise stopping the wind turbine, can result in power losses and they can reduce the productivity of a wind turbine. A typical untwist operation may take up to 15 minutes per 360 degrees full rotation and about one hour to untwist 1200 degrees. It is thus a general objective to reduce the number of untwist operations.

One solution would be to make the (power) cables longer, i.e. with a length significantly larger than the height of the tower, so as to increase the twist the cables can endure before damage occurs. However, particularly for power cables (thick copper cables); this solution could be rather expensive. Furthermore, said long cables are likely to result in increased electrical losses and in handling difficulties.

The document WO 2010/081758 discloses a slip ring arrangement, the use of slip ring arrangements for cables extending from the nacelle to the tower becoming twisted is a well-known solution. A slip ring is an electromagnetic device allowing the transmission of power from a stationary to a rotating structure. One side is kept stationary - in this case connected to the wires which go to battery storage, to an inverter, and/or to a bridge rectifier, while the other side can rotate freely into which the wires from the wind turbine generator are connected. As the wind turbine generator rotates on top of its pole, none of the rotation is transmitted through the cables below the slip ring.

One problem with this type of arrangement may be the use of complicated systems in order to reduce the cable twisting. This solution may thus be rather expensive and difficult to implement, especially if used for power transmission purposes and not only for low power signals such as those used for wind turbine control and/or auxiliary systems supply.

H. Kruckenberg, "Wind Turbine Untwisting Past Neutral", 13 April 2012, XP 040572867 discloses that if the current wind conditions are so that most of the time the nacelle has to rotate in the same direction to be upwind, it will be beneficial to untwist past neutral.

The present disclosure seeks to provide improved methods of operating a wind turbine and wind turbines that at least partially reduce one or more of the aforementioned problems.

### SUMMARY

In a first aspect, a method of operating a wind turbine according to claim 1 is provided. The wind turbine includes a tower and a nacelle positioned on top of the tower, a yaw system for rotating the nacelle with respect to the tower and one or more cables extending from the nacelle down to the tower. The method includes establishing a neutral point in which the cables are not twisted, and defining a reference point. The method further includes rotating the nacelle to align with the wind direction and when the cables reach an untwist condition in either a first or a second rotational direction, stopping the wind turbine and rotating the nacelle towards the reference point. The reference point herein is different from the neutral point.

By rotating the nacelle back to the reference point which is different from the neutral point, the cables are effectively twisted to some extent when operation is resumed. This may be particularly useful for sites in which the wind has the tendency to generally rotate in the same direction.

According to the invention, a long untwist condition is defined as the nacelle reaching a maximum rotation in either the first rotational or the second rotational direction. When such a long untwist condition is reached, regardless of the instantaneous situation, operation may be interrupted and an untwisting operation may be performed. The maximum rotation may be fixed for a wind turbine respecting a certain safety margin with respect to the maximum possible twist that the cables can endure.

According to the invention, in addition to a long untwist condition, a short untwist condition is defined as the nacelle reaching a predetermined degree of rotation for short untwist in either the first rotational or the second rotational direction and a wind velocity being below a predefined threshold or an electrical power generated being below a predefined threshold.. Untwisting is in examples only performed when the accompanying loss of productivity is acceptable. Otherwise, it is postponed.

In some embodiments, the method may further comprise defining a preferred rotational direction as the rotational direction in which the wind turns more often, the preferred rotational direction being either the first or the second rotational direction and wherein in the reference point the cables are twisted in the other of the first and second rotational directions. Such a preferred rotational direction may be determined during operation of the wind turbine, e.g. by measuring wind direction and analyzing the evolution of the wind direction during a period of time. Instead of measuring the wind direction directly, the rotation of the nacelle during a period of time may be analyzed. As the nacelle during operation normally is substantially aligned with the wind direction, the evolution of wind direction may be derived directly from the movements of the nacelle.

Alternatively, a preferred rotational direction may be determined prior to installation of a wind turbine. In this case, either wind simulations at the installation site or experimentally acquired data (e.g. by means of a meteorological mast) may be used as a basis to determine an a priori preferred rotational direction.

Based on the preferred rotational direction, the reference point (to which a nacelle is turned in an untwist operation) may be redefined, generally in the opposite rotational direction. In an example, if it is found that a wind turbine has a tendency to rotate in a clockwise direction, a reference point may be defined in which the cables are twisted e.g. 180° or 360° in a counterclockwise direction. The wind turbine may thus be rotated 180° or 360° more in the clockwise direction before an untwist condition is reached again than if the nacelle were rotated back to the neutral position. Untwisting operations may thus be less frequent.

In some embodiments, an analysis for determining a preferred rotational direction may comprise counting a number of times a predetermined degree of rotation is reached in the first rotational direction and counting a number of times the predetermined amount of rotation is reached in the second rotational direction. The predetermined degree of rotation may be a predetermine value e.g. 540° or 720°. The degree of rotation could also be defined as reaching an untwist condition.

If for example, it is noted that 720° rotation in a clockwise direction has been reached 6 times in an observation period, whereas 720° in the counterclockwise direction has never been reached in the same observation period, the reference point may be moved more in the counterclockwise direction. Let's suppose that a reference point is now defined as 300° in the counterclockwise direction with respect to the neutral position. It may turn out that over the next period, 720° of clockwise rotation (with respect to the neutral point) is reached 4 times, whereas 720° of counterclockwise direction is reached only 2 times. This may indicate that the reference point may be moved further in the counterclockwise direction. Such a process may in some embodiments be continued until the number of times the predetermined degree of rotation is reached in the first rotational direction and the number of times the predetermined degree of rotation is reached in the second rotational direction is substantially equal during an observation period.

According to the invention, the method further comprises redefining the short untwist condition depending on short-term measured conditions, wherein redefining the short untwist condition comprises the nacelle reaching a certain degree of rotation for short untwist in either the first or the second rotational direction and maintaining the certain degree of rotation for short untwist during a predetermined period of time and redefining the short untwist condition by moving away the predetermined degree of rotation defined for short untwist from the current predetermined degree of rotation for short untwist. For example, if a certain degree of rotation is maintained during 2 hours (i.e. the wind direction is substantially constant), a short untwist condition as previously explained may be moved further away from the current position. In view of the fact that the wind direction has been substantially the same for a while, a wind turbine control system may predict that the wind direction will not abruptly change. Thus, even if a previously defined short untwist condition is reached, no untwist action leading to an unnecessary interruption of the wind turbine is to be undertaken. As already mentioned, this result is achieved by properly redefining (i.e. re-adjusting) the short untwist condition. The reasoning is that in these sorts of situations, it is unlikely that a long untwist position will be reached.

In another aspect, the present disclosure provides a wind turbine according to claim 10 comprising a tower, a nacelle mounted on top of the tower, a yaw system for rotating the nacelle with respect to the tower, one or more cables extending from the nacelle to the tower and a control system adapted to carry out any of the methods claimed.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 schematically illustrates a wind rose for a particular location;
Figure 2 schematically illustrates another example of a wind rose for a different location;
Figure 3 schematically illustrates an example of a method of operating a wind turbine;
Figure 4 schematically illustrates an example of how untwist condition points may be defined in some implementations; and
Figure 5 schematically illustrates an example of an evolution of a wind direction over time.

### DETAILED DESCRIPTION

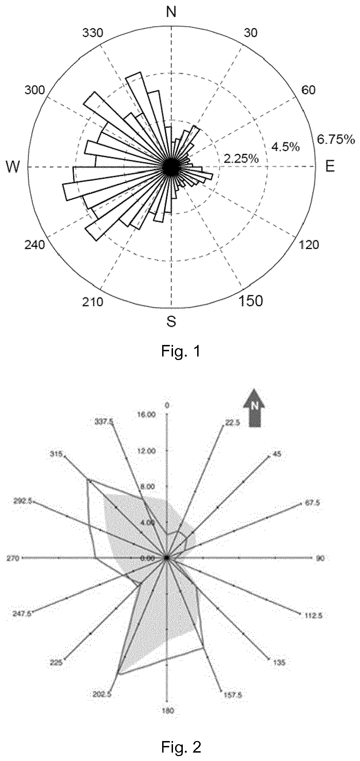

Fig.1 schematically illustrates an example of a wind rose for a particular location in which a wind turbine may be situated. A wind rose is a graphic tool that gives a view of how wind speed and direction are typically distributed at a particular location.

Fig. 2 schematically illustrates another example of a wind rose. From figure 2, the direction and distribution of wind speed and the electrical power generated at a particular location may be derived. The grey area represents the percentage of electrical power being generated by the wind turbine in the wind directions or the amount of energy in the wind for the different wind directions. The black line indicates a percentage of time in which a wind direction may be found.

Wind roses are tools that are normally used by wind turbine manufacturers and wind park developers for selecting suitable sites, and e.g. predicting energy output. However, these wind roses do not contain the information regarding how the wind direction evolves over time. It cannot be derived from these kinds of wind roses, whether at a given site the wind direction has a tendency to rotate in a preferred direction or not.

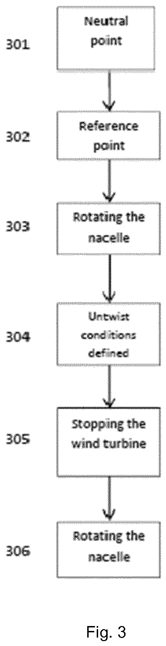

FIG. 3 is an illustration of a block diagram describing an example of a method for operating a wind turbine. At block 301, a neutral point is established as the point at which the cables are substantially untwisted. At block 302, a reference point is defined. The reference point defines the position where the nacelle is to be moved in case the system carries out an untwisting operation.

During operation, a nacelle may generally be rotated in a clockwise direction or in a counterclockwise direction in order to substantially align the nacelle with the wind. Alignment of the nacelle with the wind direction may be carried out e.g. every 5 minutes during operation. Any known yaw systems and any known type of yaw control may be used.

At block 304, one or more untwist conditions (i.e. a condition of twist that requires untwisting) may be defined. When the wind turbine (i.e. the nacelle or the cables) reaches such an untwist condition, an untwist operation may be started.

In accordance with the invention, several untwist conditions are defined including a short untwist condition and a long untwist condition. A long untwist condition is defined as the nacelle reaching a maximum rotation in either the first rotational or the second rotational direction. When such a long untwist position is reached, regardless of the instantaneous situation, operation may be interrupted and an untwisting operation may be performed to avoid potential damage of the cables.

Additionally, a short untwist condition may be defined as the nacelle reaching a predetermined degree of rotation in either the first rotational or the second rotational direction and a wind velocity being below a predefined threshold or an electrical power being generated below a predefined threshold). Alternatively, such a short untwist condition may be defined as the nacelle reaching a predetermined degree of rotation in either the first rotational or the second rotational direction and an electrical power being generated being below a predefined threshold.

When a certain degree of rotation is reached, but the wind turbine is producing a lot of electricity, i.e. in the case of relatively strong winds, it is not worth interrupting the operation of the turbine. The twist of the cables is not an imminent problem, and it may thus be beneficial to wait until the wind drops (or e.g. until maintenance takes place). The operation of the wind turbine may thus be interrupted and untwisting may be performed without losing too much productivity.

Further, at block 305 the turbine is stopped. Once the turbine has been stopped, the nacelle is rotated towards the reference point previously defined at block 302.

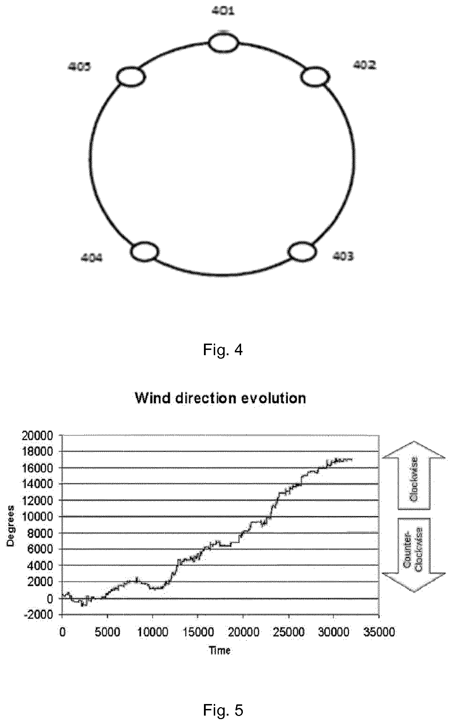

Figure 4 schematically illustrates an example of how untwist condition points may be defined in some implementations. A short untwist position may be defined in a clockwise direction 402, and another short untwist position in a counter-clockwise 405. Furthermore, a long untwist condition/position may be defined in a clockwise direction 403 and another long untwist condition/position may be defined in counter-clockwise direction 404.

At the indicated short untwist positions, corresponding short untwist conditions may be defined, e.g. as a rotational position at or beyond the short untwist position and a wind velocity below a predetermined threshold or an instantaneous power generation below a predetermined threshold.

In an example, a short untwist position may be defined for a rotation of 720 degrees in clockwise direction (with respect to a neutral position) and for a rotation of 720 degrees in counterclockwise direction (with respect to a neutral position). Corresponding short untwist conditions may thus be defined as: at least 720 degrees rotation with respect to the neutral position and a wind velocity below a predetermined threshold or an instantaneous power generation below a predetermined threshold.

Long untwist conditions in this example may be defined as a clockwise or counterclockwise rotation of 1440 degrees with respect to the neutral position. Whenever one of these long untwist positions is reached, the operation of the wind turbine is to be stopped and the nacelle is to be rotated back to a reference position. As discussed before, this reference position may not coincide with the neutral position.

In accordance with the invention, the reference position is fixed based on an analysis, e.g. a statistical analysis of wind data captured at a wind site before installation of a wind turbine. The necessary data may be available in the measurements regularly performed before installation of a wind turbine or wind park, but the information may be difficult to extract from the available data. For example, wind roses such as the ones depicted in figures 1 and 2 do not provide the necessary information, as they do not show a trend or evolution of the wind direction.

A trend of the rotation of a wind direction over time may be represented e.g. by figure 5. Figure 5 illustrates an example of an evolution of a wind direction over time. A 0° position would coincide with a 360° position and a 720° position (and so on), but the evolution indicates in this case that the position is reached every time after a rotation in the same direction. In the illustrated example, clearly a preferred rotational direction may be derived. If there were no preferred rotational direction, one would expect a sort of oscillation around 0° in a representation such as the one of figure 5.

If the reference position is fixed before or upon installation based on figure 5, a reference position could be defined as e.g. 360° or more in the opposite direction of rotation, that is, in the counter-clockwise direction in the case depicted in figure 5.

In certain other implementations, the reference position may be redefined (continuously) during operation of the wind turbine. During operation, data on the wind direction may be collected. These data may come from a direct measurement of the wind direction or may be derived from the position of the nacelle. A position of the nacelle at any given moment may be determined using a mechanical system involving e.g. cams and levers or may be determined using an electronic system.

One objective may be to determine a trend of the wind direction and based on the trend be able to predict future likely wind directions. In an example, such as the one in figure 5, the important thing is not to predict an exact wind direction over time, but rather a likely rotation of the wind direction. In another example, a control system for a wind turbine (e.g. SCADA) may determine that a wind direction has been substantially the same for a period of time, e.g. an hour or two hours. Based on this information, the control system may predict that it is unlikely that in the near future a strong change in wind direction will occur.

One example of implementing such a redefinition of a reference position during the operation of the wind turbine may be to include a counting system. A plurality of fixed measuring points could be determined e.g. at 150°, 300 °, 450 °, 600 ° and 750 ° in a clockwise and a counterclockwise direction. The control system may be configured to count every time that one of these measuring points is reached during operation. If it is found out that e.g. 600° is reached more often in a clockwise direction than in a counterclockwise direction, the reference point may be redefined, moving it in the counterclockwise direction. The reference point may be moved by a predetermined fixed increment.

If during operation it is then still found that the measurement points in the clockwise direction are more often reached than the measuring points in the counterclockwise direction, then the reference point may again be moved by the same increment. Such a process may continue until it is found that the measurement points are equally often reached in one direction as in the other direction.

In some other examples, the most recent untwist condition may be used to redefine a reference point. These examples may be particularly easily implemented in existing wind turbines and they may improve productivity of wind turbines even if no reliable historical wind data is available.

In some implementations, the redefinition of the reference point may be performed based on the fact that during operation the short untwist condition may be reached in either a clockwise or a counterclockwise direction. The reference point may be moved to the short untwist condition in the opposite direction of the last rotation (during operation).

One example of implementing such a redefinition may be: Short untwist positions may be defined at 720° rotation in both directions. Long untwist conditions may be defined at 1200° rotation in both directions. When a short untwist condition e.g. at 720° is reached in clockwise direction, the reference point may be redefined at e.g. 360° in counterclockwise direction (with respect to the neutral point). Another increment than 360° could also be used.

In some other implementations, the redefinition of the reference point may be performed based on the fact that during operation the long untwist condition is reached in either clockwise or counterclockwise direction. The reference point may then be moved in an opposite direction of the last rotation (during operation). The increment could be the same as before or different.

Such a process could also be implemented on a continuous basis. That is, if a reference point is first set at 0°, then redefined to 360° CCW (counter clockwise), and a short untwist condition is again reached in the clockwise direction, then a reference point could be moved to 720° CCW. Smaller increments could also be chosen. If in the new situation, an untwist condition is reached in the CCW direction, then the reference point may be moved in the CW direction.

Although only a number of particular embodiments and examples of the invention have been disclosed herein, it will be understood by those skilled in the art that other alternative embodiments and/or uses of the invention and obvious modifications and equivalents thereof are possible. The scope of the present invention should not be limited by particular embodiments, but should be determined only by a fair reading of the claims that follow.

## Claims

1. A method of operating a wind turbine, wherein said wind turbine includes a tower and a nacelle positioned on top of the tower, a yaw system for rotating the nacelle with respect to the tower and one or more cables extending from the nacelle to the tower, the method comprising the steps of:
establishing a neutral point of the nacelle wherein the cables are substantially not twisted;
defining a reference point;
rotating the nacelle to substantially align with the wind direction; and when the cables reach an untwist condition in either a first or a second rotational direction;
stopping the wind turbine;
rotating the nacelle towards the reference point, wherein
the reference point is different from the neutral point, and further comprises
performing an analysis of the rotation of the nacelle and / or a wind direction and redefining the reference point based on said analysis and
a long untwist condition is defined as the nacelle reaching a maximum rotation in either the first rotational or the second rotational direction, and **characterized in that**
a short untwist condition is defined as the nacelle reaching a predetermined degree of rotation for short untwist in either the first rotational or the second rotational direction and a wind velocity or an electrical power being generated being below a predefined threshold, and
the method further comprises
redefining the short untwist condition, wherein
redefining the short untwist condition comprises the nacelle reaching a certain degree of rotation for short untwist in either the first or the second rotational direction and maintaining the certain degree of rotation for short untwist during a predetermined period of time and redefining the short untwist condition by moving away the predetermined degree of rotation defined for short untwist from the current predetermined degree of rotation for short untwist.

2. Method according to claim 1, further comprising defining a preferred rotational direction as the rotational direction in which the wind turns more often, the preferred rotational direction being either the first or the second rotational direction and wherein in the reference point the cables are twisted in the other of the first and second rotational directions.

3. Method according to claim 2, wherein defining a preferred rotational direction comprises analyzing the rotation of the nacelle during a predetermined period of time.

4. Method according to claim 2, wherein defining a preferred rotational direction comprises measuring a wind direction during a predetermined time and analyzing a variation of the wind direction during said predetermined period of time.

5. Method according to claim 2, wherein defining a preferred rotational direction comprises determining the direction of rotation in which a most recent untwist condition was reached.

6. Method according to any of claims 1 - 5, wherein said analysis is performed substantially continuously.

7. Method according to claim any of claims 1 - 6, wherein said analysis comprises counting a number of times a predetermined degree of rotation is reached in the first rotational direction and counting a number of times the predetermined amount of rotation is reached in the second rotational direction.

8. Method according to claim 7 further comprising redefining the reference point until the number of times the predetermined degree of rotation is reached in the first rotational direction and the number of times the predetermined degree of rotation is reached in the second rotational direction is substantially equal.

9. Method according to claim 8, wherein redefining the reference point comprises moving the reference point a predetermined amount either in the first rotational direction or in the second rotational direction.

10. Wind turbine comprising a tower, a nacelle mounted on top of the tower, a yaw system for rotating the nacelle with respect to the tower, one or more cables extending from the nacelle to the tower and a control system adapted to carry out a method according to any of claims 1 - 9.

## Patentansprüche

1. Verfahren zum Betreiben einer Windturbine, wobei die Windturbine einen Turm und eine oben auf dem Turm positionierte Gondel, ein Giersystem zum Drehen der Gondel in Bezug zum Turm und ein oder mehrere Kabel umfasst, die sich von der Gondel zum Turm erstrecken, wobei das Verfahren die folgenden Schritte umfasst:
Festlegen eines neutralen Punkts der Gondel, an dem die Kabel im Wesentlichen nicht verdreht sind;
Definieren eines Bezugspunkts;
Drehen der Gondel, um sie im Wesentlichen an der Windrichtung auszurichten; und wenn die Kabel entweder in einer ersten oder einer zweiten Drehrichtung einen nicht verdrehten Zustand erreichen;
Anhalten der Windturbine;
Drehen der Gondel in Richtung des Bezugspunkts, wobei
sich der Bezugspunkt vom neutralen Punkt unterscheidet, und ferner umfassend
Durchführen einer Analyse der Drehung der Gondel und/oder einer Windrichtung und erneutes Definieren des Bezugspunkts basierend auf dieser Analyse und
wobei ein Zustand für langes Aufdrehen definiert ist als einer, in dem die Gondel eine maximale Drehung entweder in der ersten Drehrichtung oder in der zweiten Drehrichtung erreicht, und **dadurch gekennzeichnet, dass**
ein Zustand für kurzes Aufdrehen definiert ist als einer, in dem die Gondel einen vorbestimmten Drehungsgrad für kurzes Aufdrehen entweder in der ersten Drehrichtung oder in der zweiten Drehrichtung erreicht und eine Windgeschwindigkeit oder eine erzeugte elektrische Energie eine vordefinierte Schwelle unterschreitet, und
wobei das Verfahren ferner umfasst
erneutes Definieren des Zustands für kurzes Aufdrehen, wobei
das erneute Definieren des Zustands für kurzes Aufdrehen umfasst, dass die Gondel einen vorbestimmten Drehungsgrad für kurzes Aufdrehen entweder in der ersten oder in der zweiten Drehrichtung erreicht und den bestimmten Drehungsgrad für kurzes Aufdrehen während eines vorbestimmten Zeitraums aufrechterhält und den Zustand für kurzes Aufdrehen durch Wegbewegen des vorbestimmten Drehungsgrads für kurzes Aufdrehen von dem aktuellen vorbestimmten Drehungsgrad für kurzes Aufdrehen erneut definiert.

2. Verfahren nach Anspruch 1, ferner umfassend das Definieren einer bevorzugten Drehrichtung als die Drehrichtung, in die der Wind häufiger dreht, wobei die bevorzugte Drehrichtung entweder die erste oder die zweite Drehrichtung ist und wobei die Kabel im Bezugspunkt in der anderen der ersten und zweiten Drehrichtung verdreht sind.

3. Verfahren nach Anspruch 2, wobei das Definieren einer bevorzugten Drehrichtung das Analysieren der Drehung der Gondel während eines vorbestimmten Zeitraums umfasst.

4. Verfahren nach Anspruch 2, wobei das Definieren einer bevorzugten Drehrichtung das Messen einer Windrichtung während einer vorbestimmten Zeit und das Analysieren einer Anderung der Windrichtung während des vorbestimmten Zeitraums umfasst.

5. Verfahren nach Anspruch 2, wobei das Definieren einer bevorzugten Drehrichtung das Bestimmen der Drehrichtung umfasst, in der ein jüngster Zustand des Aufdrehens erreicht wurde.

6. Verfahren nach einem der Ansprüche 1 bis 5, wobei die Analyse im Wesentlichen kontinuierlich durchgeführt wird.

7. Verfahren nach einem der Ansprüche 1 bis 6, wobei die Analyse das Zählen umfasst, wie oft ein vorbestimmter Drehungsgrad in der ersten Drehrichtung erreicht wird, und das Zählen, wie oft der vorbestimmte Drehungsgrad in der zweiten Drehrichtung erreicht wird.

8. Verfahren nach Anspruch 7, ferner umfassend das erneute Definieren des Bezugspunkts, bis die Häufigkeit, mit der der vorbestimmte Drehungsgrad in der ersten Drehrichtung erreicht wird, und die Häufigkeit, mit der der vorbestimmte Drehungsgrad in der zweiten Drehrichtung erreicht wird, im Wesentlichen gleich sind.

9. Verfahren nach Anspruch 8, wobei das erneute Definieren des Bezugspunkts das Bewegen des Bezugspunkts um einen vorbestimmten Betrag entweder in der ersten Drehrichtung oder in der zweiten Drehrichtung umfasst.

10. Windturbine, umfassend einen Turm, eine oben auf dem Turm montierte Gondel, ein Giersystem zum Drehen der Gondel in Bezug zum Turm, ein oder mehrere Kabel, die sich von der Gondel zum Turm erstrecken, und ein Steuersystem, das zum Durchführen eines Verfahrens nach einem der Ansprüche 1 bis 9 beschaffen ist.

## Revendications

1. Procédé de fonctionnement d'une éolienne, ladite éolienne comprenant une tour et une nacelle positionnée au sommet de la tour, un dispositif d'orientation de la nacelle pour faire tourner la nacelle par rapport à la tour et un ou plusieurs câbles partant de la nacelle à la tour, le procédé comprenant les étapes consistant à :
établir un point neutre de la nacelle dans lequel les câbles ne sont pas sensiblement enroulés ;
définir un point de référence ;
faire tourner la nacelle pour qu'elle s'aligne sensiblement avec la direction du vent ; et lorsque les câbles atteignent un état de déroulement dans un premier ou un second sens de rotation ;
arrêter l'éolienne ;
faire tourner la nacelle vers le point de référence,
le point de référence étant différent du point neutre et le procédé consiste en outre à
effectuer une analyse de la rotation de la nacelle et/ou d'une direction du vent et à redéfinir le point de référence sur la base de ladite analyse, et
un long état de déroulement est défini lorsque la nacelle atteint une rotation maximale soit dans le premier soit dans le second sens de rotation, et **caractérisé en ce qu'**
un état de déroulement court est défini lorsque la nacelle atteint un degré de rotation prédéfini pour un déroulement court soit dans le premier sens de rotation soit dans le second sens de rotation et une vitesse du vent ou une puissance électrique produite étant inférieure à un seuil prédéfini, et
le procédé consiste en outre à
redéfinir l'état de déroulement court,
la redéfinition de l'état de déroulement court consistant **en ce que** la nacelle atteint un certain degré de rotation pour le déroulement court soit dans le premier soit dans le second sens de rotation et maintient ce certain degré de rotation pour l'enroulement court pendant une période de temps prédéfinie et à redéfinir l'état de déroulement court par déplacement du degré de rotation prédéfini pour le degré de rotation actuel prédéfini pour le déroulement court.

2. Procédé selon la revendication 1, consistant en outre à définir un sens de rotation préféré comme le sens de rotation dans lequel le vent tourne le plus souvent, le sens de rotation préféré étant soit le premier soit le second sens de rotation, et au point de référence les câbles sont enroulés dans l'autre sens parmi le premier et le second sens de rotation.

3. Procédé selon la revendication 2, la définition d'un sens de rotation préféré consistant à analyser la rotation de la nacelle pendant une période de temps prédéfinie.

4. Procédé selon la revendication 2, la définition d'un sens de rotation préféré consistant à mesurer un sens du vent pendant un temps prédéfini et à analyser une variation du sens du vent pendant ladite période de temps prédéfinie.

5. Procédé selon la revendication 2, la définition d'un sens de rotation préféré consistant à déterminer le sens de rotation dans lequel un état de déroulement le plus récent a été atteint.

6. Procédé selon l'une quelconque des revendications 1 à 5, ladite analyse étant effectuée sensiblement en continu.

7. Procédé selon l'une quelconque des revendications 1 à 6, ladite analyse consistant à compter le nombre de fois qu'un degré de rotation prédéfini est atteint dans le premier sens de rotation et à compter le nombre de fois que le degré de rotation prédéfini est atteint dans le second sens de rotation.

8. Procédé selon la revendication 7, consistant en outre à redéfinir le point de référence jusqu'à ce que le nombre de fois que le degré de rotation prédéfini est atteint dans le premier sens de rotation et le nombre de fois que le degré de rotation prédéfini est atteint dans le second sens de rotation soit sensiblement égal.

9. Procédé selon la revendication 8, la redéfinition du point de référence consistant à déplacer le point de référence d'une quantité prédéfinie soit dans le premier sens de rotation soit dans le second sens de rotation.

10. Éolienne comprenant une tour, une nacelle montée au sommet de la tour, un dispositif d'orientation de la nacelle pour faire tourner la nacelle par rapport à la tour, un ou plusieurs câbles partant de la nacelle à la tour et un système de commande conçu pour mettre en œuvre un procédé selon l'une quelconque des revendications 1 à 9.
